# EUROPEAN PATENT APPLICATION

(11) **EP 2 506 277 A2**
(43) Date of publication of application: **03.10.2012**
(21) Application number: 12160571.1
(22) Date of filing: 21.03.2012
(51) Int. Cl.: H01H 9/02, H02B 13/045

(54) **A switchgear assembly**

(30) Priority: 28.03.2011 IN DE08482011
(71) Applicant: Schneider Electric Infrastructure Limited, 391510 Vadodara, Gujarat (IN)
(72) Inventor: Raorane, Deepak, 400604 Thane (W), Maharashtra (IN); Agrawal, Ashish, 322201 Gangapur City, Dist. Swai Madhopur, Rajasthan (IN)
(74) Representative: Mati, Silvia

(57) **Abstract**

A switchgear assembly comprising a tank housing encapsulating at least one switching contact; at least one transparent viewing port on the tank housing; at least one external light source for illuminating the at least one contact and reflective optical means for observing the position of the switching contacts;
wherein an inspection window is on a front frame at a safe distance outside of the tank housing for viewing the reflection of at least one contact on the optical means through the transparent viewing port and wherein the optical means illuminate the at least one contact by directing the light from the external light source on the at least one contact.

## Description

### FIELD OF THE INVENTION

The present invention relates to electrical equipments.

In particular; this invention relates to systems for detecting state of electrical contacts in enclosed electrical equipments such as switchgears.

More particularly, this invention relates to viewing the rotary knife blade contact earthing system in electrical equipments such as switchgears.

### BACKGROUND OF THE INVENTION

Switchgears are used in the electric power systems or grids and basically refer to the combination of disconnectors, fuses and/or circuit breakers used to isolate electrical equipment from the mains. Switchgears are used to de-energize equipment to allow work to be done and to clear faults in the electrical equipment. This type of equipment is important because it is directly linked to the connectivity of the electricity supply.

The earliest central power stations used simple open knife switches, mounted on insulating panels of marble or asbestos. However, increasing power levels and voltages have made open manually-operated switches very dangerous to use for anything other than isolation of a de-energized circuit. By the early 20th century, a switchgear line-up was made up of a metal-enclosed structure with electrically-operated switching elements, using oil circuit breakers. Today, oil-filled equipment has largely been replaced by gas insulated equipments allowing large currents and power levels to be safely controlled.

High voltage switchgear was invented at the end of the 19th century for operating motors and others electric machines. The technology has been improved over time and is used with voltages hp to 1,100 kV. However, till date there is a need to manually view the contacts. Since it is tedious to view the contacts in an enclosed housing and the result yielded by the sensors is not 100 percent guaranteed, there is a need for a manual mechanism to view the internal parts in the enclosed electrical equipment.

In case of gas insulated switchgears, position of switch and contacts cannot be viewed from the front side even if a front inspection window is provided due to its design restrictions. Further, it is not advisable to risk the life of workers during maintenance work if the state of the equipment cannot be properly determined. In the prior art, cut out was directly provided on the front side of the equipment to view the position of the contacts. However, such solution has not been successful due to the construction, position and design limitations. Further, variable case sizes and switch orientation has limited implementation of this technology. Also, presence of gas within the housing further reduces visibility of the operator. In another arrangement, position of the switch was changed to bring the earthing switch on top with linear motion contacts inside transparent glass insulation so that position of the contacts can be seen clearly. However, this arrangement escalates cost of the equipment due to the requirement of a new switch to meet such design changes.

German Patent No. 296 08 127 discloses endoscope devices wherein the endoscope devices are directly guided through guide tubes to the inspection windows of the switch panels, to be able to view the contact points arranged behind these inspection windows. The guide tubes of the switch panels are accessible from the front side, so that the operating personnel can directly manipulate the endoscope devices from the operating side of the switch panels.

The endoscope devices are equipped with an optical lens at their free end and also have a light source, allowing the contact areas arranged in the housings of the switch panels to be observed using these endoscope devices. At the same time, endoscope devices must be positioned in such a way that both the image segment and the image brightness are adequate to be able to assess the contact points with sufficient reliability.

Therefore, there is a need to view and provide illumination inside enclosed electrical equipments in a more efficient and cost effective manner.

### OBJECTS OF THE INVENTION

It is an object of the present invention to provide a switchgear assembly for visually observing the position of contacts inside the housings.

It is also an object of the invention to provide a switchgear assembly which may be installed at site or factory wherein contacts enclosed in the tank circuit can be viewed clearly.

It is yet another object of the invention to provide switchgear assembly, which mitigates need of changing the viewing angle to view polyphase contacts.

It is yet another object of the invention to provide switchgear assembly having simplified operation.

It is yet another object of the invention to provide switchgear assembly with additional safety measures.

It is yet another object of the invention to provide switchgear assembly, which is economic in construction and operation.

It is yet another object of the invention to provide switchgear assembly, which is compact in design.

### SUMMARY OF THE INVENTION

According to an aspect of the invention a switchgear assembly comprising a tank housing encapsulating at least one switching contact; at least one transparent viewing port on the tank housing; at least one external light source for illuminating the at least one contact and reflective optical means for observing the position of the switching contacts; wherein an inspection window is on a front frame at a safe distance outside of the tank housing for viewing the reflection of at least one contact on the optical means through the transparent viewing port and wherein the optical means illuminate the at least one contact by directing the light from the external light source on the at least one contact so that position of contacts is seen clearly and maintenance work is carried out safely by the maintenance staff.

### BRIEF DESCRWTION OF THE DRAWINGS

Figure 1 illustrates side view of the switchgear assembly according an embodiment of this invention.
Figure 2 illustrates exploded view of the switchgear assembly according to another embodiment of the present invention.
Figure 3 illustrates the working of the switchgear assembly according to one embodiment of the present invention.

### DETAILED DESCRIPTION OF THE INVENTION

The invention may be better understood and further advantages and uses thereof more readily apparent when considered in view of the following detailed description of exemplary embodiments taken with the accompanying drawings. These embodiments describe only a few of the various ways in which the principles of various other embodiments may be realized and the described embodiments are intended to include all such embodiments and their equivalents and the reference numerals used in the accompanying drawings correspond to the like elements throughout the description.

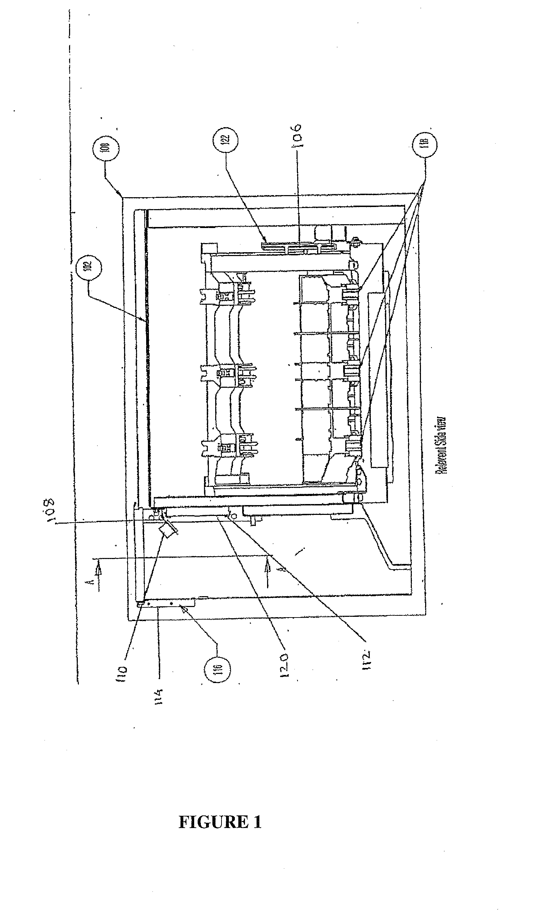

Figure 1 illustrates a switchgear assembly (100) having a tank housing (102) which encapsulates a rotary knife blade contact earthing system (110), a reflecting surface (106) and high voltage equipment which needs to be secured from the operator for safety of the operator. Tank housing (102) has a bracket (108) welded on to it for mounting at least one external light source (illuminating means) (110) wherein said light source (110) is directed inside the housing (102) through at least one hermetically sealed viewing port (112). Further, an additional viewing window (114) is provided on a front frame (116) at a distance from the tank housing (102) so that operator will be at a safe distance from the unit (102).

The tank housing (102) is a gas-tight encapsulating enclosure formed from electrically resistant material and surrounds one or more contacts (118). Gas-insulated electrical enclosure (102) has an electrode (not known) disposed at a higher potential in respect of the enclosure. Said enclosure (102) has an electrically insulating gas disposed within so that inner-disposed electrode is insulated from the outer enclosure. The contacts (118) are arranged in the encapsulating enclosures internal area and have a contact point which can move relative to one another between close, open and ground positions. The gas-tight encapsulating (102) enclosure is formed from a material through which optical rays cannot pass and has a viewing port (112) in the wall to observe the position of the contacts within said housing.

The viewing port has a focusing lens (120) which is formed from a gas-tight material through which visible light can pass, such as glass. The lens system (120) is designed to be gas-tight and pressure-resistant. Depending on the requirement, the position of the contacts (118) can be monitored via the lens system (120) wherein manual monitoring is carried out by an operator. According to another embodiment of the present invention said inspection window has a pressure sensor (not known) for detecting pressure overload before the bursting limit of the inspection window (112) is reached.

In ease a fault occurs, it is necessary to inspect the faulty area to evaluate the damage and determine whether the damaged parts have to be replaced or repaired. To do this in an efficient manner, it is necessary to have an efficient inspection system which allows visual observation of the contacts and determine manually if the contacts are in grounded position without removing the insulating gas. While doing manual monitoring, operator observes the contacts (118) within the housing (102) through a inspection window (114) which is formed on the front frame (116). Said front frame (116) is an extension from the top of the housing (102) in the horizontal direction wherein said second window (114) is placed further away from the housing (102), thus providing additional security to the user operating the switchgear assembly. Location of the second window (114) is such that the operator is able to view the reflecting surface (106) through the light passing (112) in the tank. Since the tank housing (102) is made from an optical light resistant material, the mirror reflection will not be clearly visible inside the housing. Therefore an external light source (110) such as a Light Emitting Diode (LED) or more than one light source is mounted on the bracket (108) near the light pass (112) on the exterior of the tank housing (102). The LED is mounted on the bracket (108) in such a way that optical axis of the rays emitted from the LED and the optical axis of the rays incident on the operators eye at the second window (114) are aligned to provided proper illumination of the contacts. Generally a light flux of minimum 300 lumens is provided by using an AC to DC converter (not shown) in connection with the LED to clearly observe the position of the contacts within the housing. The reflecting surface is a mirror mounted (106) on a bracket (122), such that all the polyphase contacts (118) are visible in the mirror (106) from a single angle. Said mirror (106) and bracket (122) form an integral part of the switch gear assembly and have a fixed relative position with the switch gear assembly wherein cleaning of the mirror (106) is not required during its lifetime, thus avoiding any relative movement of the mirror (106) and any loss resulting thereof. According to another embodiment of the present invention, no markings on contacts will be required as only the contacts (118) of interest will be visible to the operator and thus the operator will not be confused with others parts of the switchgear assembly.

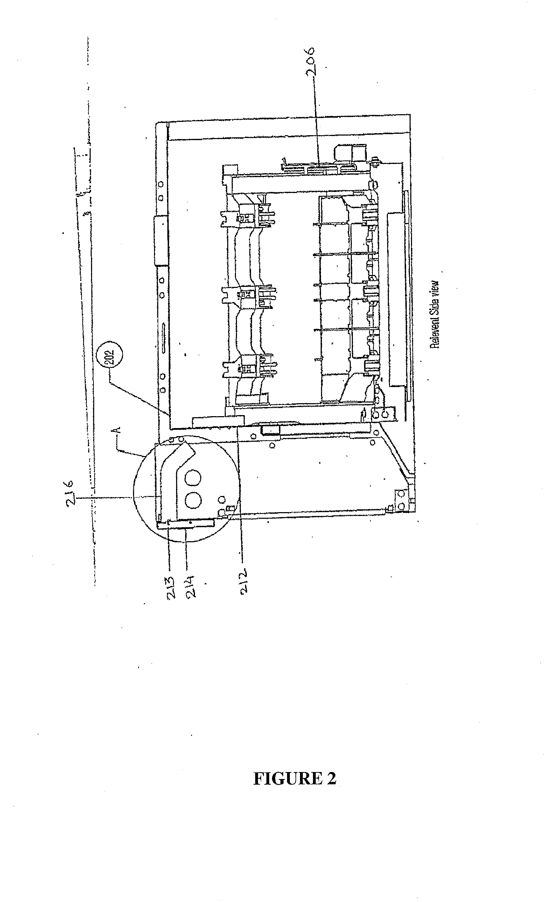

Figure 2 illustrates another embodiment of the present invention wherein the front frame (216) has two windows. One window (214) for viewing the contacts (not shown) in the tank housing and other window (213) for illuminating the contacts (218) via a torch or illuminating means (210) known in the art. Window (213) for illuminating the contacts within the housing is operationally connected to a steel or plastic tube (250) having reflecting coating on the interior surface. In alternative a reflecting surface may be placed inside the tunnel (250) instead of a reflective coating. The tunnel (250) is placed such that light passes through the tunnel and reaches the reflective surface on the rear side of the tank housing through the light pass (212) in the tank housing (202). Thus, the operator is able to clearly observe the contacts in the reflecting mirror (206) through the light pass (212) in the tank housing (202) and the viewing window (214) in the front frame (216).

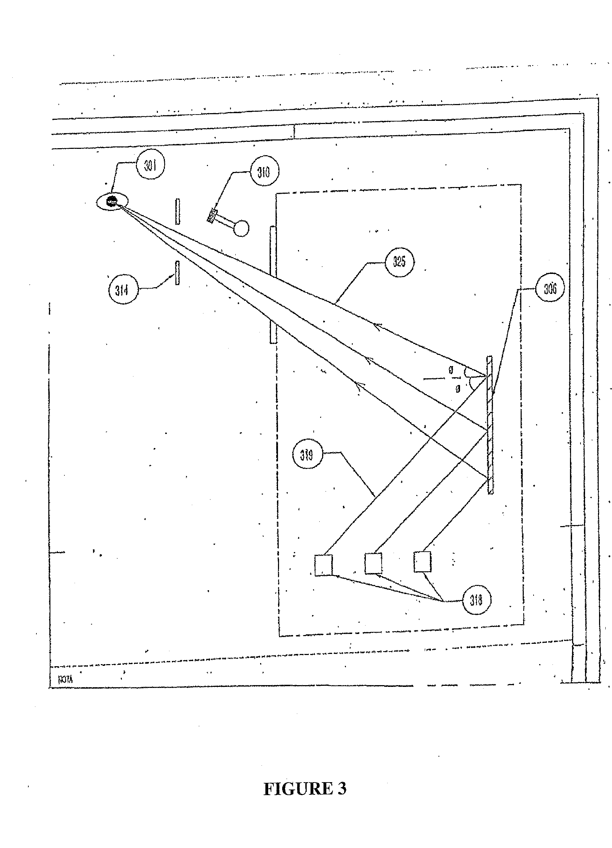

Figure 3 illustrates the working model of the present invention wherein the operator (301) is able to view an image of contacts (318) when he places his eye near the inspection window (314) on the front frame (316), The light rays (319) emanating from contacts (318) incident on a reflecting surface (306) at a certain angle, form an image of contacts on the reflecting mirror (306). The reflected light rays are reflected at the same angle from normal plane to the reflecting surface. In order to view the image of contacts (318), the contacts need to be illuminated properly so that the rays are able to reach viewer's eye (301) after all reflection and partial refraction and absorption of light in the medium in which rays travel, Thus, illuminating means i.e. the LED (310) or the torch in combination with the endoscopic tunnel is aligned such that optical axis of the rays (325) reaching the eye of the operator from the reflecting surface and the rays of light emanated by the illuminating means have a similar path.

When the switch is in earth position and contacts (318) are needed to be seen to ensure the proper earthing, light source is switched on to illuminate the contacts (318). The light rays emanating from switch contacts travel towards the reflecting surface forming an image of contacts. The reflected rays pass through the different transparent windows and the viewer observes the clear image of earthing contacts to determine whether it is safe for the maintenance staff to carry the maintenance work.

According to another embodiment of the invention, light pass in the housing, inspection window on the front frame and the reflecting surface mounted on the bracket are aligned together in such a way that the contacts will be visible only when contacts are in the grounded position. Thus, avoiding any confusion that is created due to positioning of the contacts. According, to another embodiment of the present invention, LED will be switched on only when the contacts are in the grounded position. Thus, the contacts will be visible when the light source is in grounded position.

In view of the present disclosure which describes the current best mode for providing a switchgear assembly wherein many modifications and variations would present themselves to those skilled in the art without departing from the scope and spirit of this invention. All changes, modifications and variations coming within the meaning and range of equivalency are considered within the scope.

## Claims

1. A switchgear assembly comprising a tank housing encapsulating at least one switching contact; at least one transparent viewing port on the tank housing; at least one external light source for illuminating the at least one contact and reflective optical means for observing the position of the switching contacts;
wherein an inspection window is on a front frame at a safe distance outside of the tank housing for viewing the reflection of at least one contact on the optical means through the transparent viewing port and wherein the optical means illuminate the at least one contact by directing the light from the external light source on the at least one contact.

2. A switchgear assembly as claimed in claim 1, wherein said at least one contact is observed on the optical means through the transparent window while the contacts are in earth position.

3. A switchgear assembly as claimed in claim 2, wherein the transparent window is a hermetically sealed light pass to view the at least one contact.

4. A switchgear assembly as claimed in claim 1, wherein said optical means is a reflecting mirror,

5. A switchgear assembly as claimed in claim 4, wherein said mirror is mounted on a bracket on the rear side of the housing.

6. A switchgear assembly as claimed in claim 1, wherein the position of the inspection window and the contacts is aligned to observe all contacts in one viewing angle.

7. A switchgear assembly as claimed in claim 1, wherein said front frame extends away from the housing in the horizontal plane to provide additional security to the operator.

8. A switchgear assembly as claimed in claim 1, wherein the external light source is a Light Emitting Diode (LED).

9. A switchgear assembly as claimed in claim 1, wherein light illuminated from the external light source is directed on the mirror.

10. A switchgear assembly as claimed in claim 9, wherein the illumination means has light flux of minimum 300 lumens.

11. A switchgear assembly as claimed in claim 1, wherein the tank housing is filled with a gas.

12. A switchgear assembly as claimed in claim 1, wherein said contacts are knife blade contacts.

13. A switchgear assembly as claimed in claim 1, wherein said contacts are movable between close, open and ground positions.
